# EUROPEAN PATENT SPECIFICATION

(11) **EP 3 711 873 B1**
(45) Date of publication and mention of the grant of the patent: **20.07.2022**
(21) Application number: 19164525.8
(22) Date of filing: 22.03.2019
(51) Int. Cl.: B21B 1/34

(54) **METHOD AND HOT-ROLLING EQUIPMENT**
VERFAHREN UND WARMWALZAUSRÜSTUNG
PROCÉDÉ ET ÉQUIPEMENT DE LAMINAGE À CHAUD

(43) Date of publication of application: 23.09.2020
(73) Proprietor: SSAB Technology AB, 101 21 Stockholm (SE)
(72) Inventor: Steninger, Jan, 611 46 Nyköping (SE)
(74) Representative: Valea AB

(56) References cited:
- EP-A1- 2 208 547
- GB-A- 2 030 491
- US-A- 5 430 930
- US-A- 5 499 523

## Description

### TECHNICAL FIELD

The present invention concerns a method for manufacturing a plurality of hot-rolled metal plates and hot-rolling equipment used for carrying out such a method.

### BACKGROUND OF THE INVENTION

Reversing rolling is a metal forming process in which a metal workpiece is deformed plastically by allowing it to pass forward and backward between a pair of rollers to reduce its thickness incrementally with each pass. The total amount of reduction in the workpiece's thickness governs its elongation in length since its volume remains constant before and after it is passed through the reversing rolling mill. In order to increase the flowability of the metal during the reversing rolling, the process is usually performed at a high temperature whereby roller load requirements are reduced.

Cross-rolling, in which the rolling direction of a metal plate is changed by rotating the workpiece by 90° about the normal direction, is sometimes utilized in reversing rolling mills. A metal slab which typically has a thickness of 100-300 mm, is re-heated to a suitable rolling temperature and then rolled in a reversing rolling mill. The metal slab can be rotated one or more times to achieve a desired plate width. Once the desired plate width has been achieved, the plate is rolled to a final thickness.

Heat loss occurs while a workpiece is being rolled in a reversing rolling mill and during cross-rolling. The temperature of the workpiece will consequently decrease during these rolling processes. The greater the length of the metal plate, the longer the duration of each rolling pass will be, and this will result in increased heat loss from the metal plate and a greater temperature decrease. The final thickness of a metal plate, and consequently the maximum metal plate length which can be achieved by a reversing rolling mill, will therefore be limited by this heat loss and temperature decrease. Additionally, the rate of heat loss and temperature decrease accelerates with decreasing thickness of the metal plate since the surface of the metal plate increases with each thickness-reducing pass in a rolling mill.

Furthermore, as the metal plate temperature decreases, the deformation resistance of the metal plate increases, which means that increasing roll forces will be required to achieve a particular decrease in thickness, which will eventually make it impossible to proceed with the rolling process and keep the final thickness, the cross sectional profile and/or the shape of the metal plate within the required tolerances. When hot-rolling steel plates, such problems resulting from heat loss from the steel plates start to occur when a steel plate has been rolled to a thickness of approximately 8-10 mm.

A solution to the above-mentioned problems which enables thinner metal plates to be rolled in a reversing rolling mill, is to limit the maximum metal plate length which must be rolled by using more lightweight metal slabs. If shorter metal plate lengths are used, the temperature decrease of a metal plate can be limited as well as the temperature difference between the head and tail of the metal plate.

US patent no. US 5,499,523, forming the basis for the preamble of claim 1 and claim 10, discloses a method of producing hot-rolled metal strip and a method of controlling the productivity of a rolling plant having at least first and second rolling stands by processing a single slab of metal into metal strips having different thicknesses. The output requirements for strips having at least first and second different thicknesses to be produced by the rolling plant are determined. The slab is then rolled in a first rolling stand to reduce the slab thickness to produce a transfer bar. The transfer bar is sheared into first and second transfer bar portions such that the first and second transfer bar portions are sized to correspond to the output requirements for the first and second strips, respectively. The first transfer bar portion is then rolled in one of the first and second rolling stands to reduce the first transfer bar portion to produce a first strip having a first thickness. This method therefore enables transfer bars having different final thicknesses to be rolled from a single slab of metal. A transfer bar is namely sheared to solve the problem of producing a plurality of transfer bar portions that can subsequently each be rolled to a different final thickness.

US patent no. US 5,499,523 also discloses that a Steckel mill may be used to mitigate temperature losses by winding the metal plate into a coil around a Steckel drum on each side of a reversing roll stand to limit the surface area from which heat is radiated. Steckel mills are usually used when rolling long and heavy metal slabs which cannot be cross-rolled and they are usually limited to the manufacture of metal plates having a width up to 3048 mm. A drawback of coiling a metal plate in Steckel drums is that the surface of the metal plate at its head and tail may get damaged as a result of the coiling. Steckel mills are also complicated to control and expensive to build.

EP 2,208,547A1 concerns a magnesium alloy hot rolling method that includes: a first rolling step in which a magnesium plate is rolled reciprocatingly between an upstream heating furnace which is located on an upstream side of a rolling mill and which heats the magnesium plate, and a upstream heating furnace which is located on a downstream side of the rolling mill and which heats the magnesium plate; and a second rolling step in which the temperature of respective end portions of the magnesium plate on both the upstream and downstream sides is maintained while the magnesium plate is being rolled reciprocatingly between an upstream temperature maintaining apparatus which transports the heated magnesium plate while maintaining the temperature thereof, and a downstream temperature maintaining apparatus which transports the heated magnesium plate while maintaining the temperature thereof. It is thereby possible to prevent any deterioration in the quality of a product which is due to temperature variations during the hot rolling of the magnesium alloy.

### SUMMARY OF THE INVENTION

An object of the invention is to at least partly overcome at least one of the disadvantages of the prior art methods for manufacturing a plurality of hot-rolled metal plates (i.e. two or more hot-rolled metal plates).

This object is achieved by a method comprising the steps of re-heating a metal slab to a rolling temperature, rolling the metal slab in a reversing rolling mill to produce a metal plate having an intermediate thickness, i.e. a thickness between the initial thickness of the metal slab and the desired final thickness of a manufactured hot-rolled metal plate, and shearing the metal plate to divide it into a first divided metal plate and at least a second divided metal plate, i.e. the metal plate is divided into two or more divided metal plates. The method comprises the steps of rolling the first divided metal plate to a final thickness in the reversing rolling mill, i.e. directly rolling the first divided metal plate as soon as the second divided metal plate and any other divided metal plate(s) have been moved away from the reversing rolling mill, and transferring at least the second metal plate (i.e. the second divided metal plate and any other divided metal plate(s)) to a temperature-holding device to maintain it/them at a desired temperature while the first metal plate is rolled to the final thickness in the reversing rolling mill. The method comprises the step of transferring the second divided metal plate from the temperature-holding device to the reversing rolling mill once the first divided metal plate has been rolled to its final thickness in the reversing rolling mill, and rolling the second divided metal plate to a final thickness in the reversing rolling mill.

Each of the divided metal plates that have been transferred to the temperature-holding device are subsequently transferred to the reversing rolling mill one at a time and rolled to a final thickness to produce a plurality of manufactured hot-rolled metal plates.

Since the method according to the present invention will minimize heat losses from the workpieces during the manufacturing process, increasing roll forces will not be required to achieve a particular decrease in thickness or a particular extension in length. It will consequently be possible to proceed with the rolling and keep the final thickness, profile and/or shape of the metal plate within the required tolerances. The total time for rolling all of the divided metal plate will be shorter than if the original metal slab had been rolled to the final thickness in one piece and this will thereby mitigate the temperature drop. Metal plates having a smaller final thickness and consequently a greater maximum plate length than those obtained using known methods that do not utilize a temperature-holding device are thereby obtainable from a reversing rolling mill for a given rolling mill force capability.

The method according to the present invention will thereby increase process efficiency and increase the yield from metal slab to plate, especially when used to manufacture thin metal plates (i.e. metal plates having a thickness of less than 10mm). The method also enables a plurality of metal plates having the same or varying thickness and/or length and/or width to be manufactured in a reversing plate mill while maintaining a high productivity, i.e. a productivity that is higher than that achieved using reversing rolling methods that do not utilize a temperature-holding device.

No Steckel mill is used in the method according to the present invention, which reduces the cost and complexity of the method and hot-rolling equipment needed to carry out the method, and eliminates the need to cut off parts of the metal plate which are damaged as a result of coiling. The method according to the present invention thereby provides an alternative to using a Steckel mill in the manufacture of hot-rolled metal plates, whereby a temperature-holding device can consequently be used to manufacture hot-rolled metal plates having a width greater than 3048 mm, such as hot-rolled plates with a width of at least 3050 mm, or at least 4000 mm, or at least 5000 mm.

The method according to the present invention therefore includes a shearing step, rather than a Steckel mill, in order to solve the problem of heat loss from a workpiece during rolling. Furthermore, the temperature-holding device used in the method ensures that heat is retained in the divided metal plates and that there is a homogeneous temperature distribution within each divided metal plate, which in turn improves the uniformity of the manufactured hot-rolled products.

The expression "temperature-holding device" is intended to mean any arrangement which maintains the temperature of at least one divided metal plate at a particular temperature or within a particular temperature range.

The temperature may be held at the temperature at which the metal plate was rolled in the reversing rolling before it was sheared, or the temperature at which the at least one divided metal plate is to be rolled, or a temperature that is within 200°C, of the rolling temperature, preferably within 100°C of said rolling temperature, and more preferably with 50°C of said rolling temperature.

According to an embodiment of the invention, the temperature at which at least one divided plate is held in the temperature-holding device is lower than the rolling temperature to which the metal slab is re-heated. The at least one divided metal plate may for example be maintained at a temperature which is 80-90% of said rolling temperature in the temperature-holding device. The temperature at which at least one divided plate is held in the temperature-holding device will depend on the metal from which the at least one divided metal plate is made and on the requirements of the subsequent rolling process.

The temperature-holding device does not comprise any winding means or coiling means to wind/coil a divided metal plate. Instead, the temperature-holding device is arranged to maintain the temperature of at least one divided metal plate that has been rolled in a reversing mill but that has not been subsequently wound/coiled either before or as it enters the temperature-holding device. The temperature-holding device is not namely a Steckel mill.

One or more temperature-holding devices may be used in the method according to the present invention. Each temperature-holding device may be arranged to contain one divided metal plate or a plurality of divided metal plates. Divided metal plates may be stacked in one or more piles inside a temperature-holding device.

Alternatively, the temperature-holding device maintains the temperature of at least one divided metal plate within 200°C, within 100°C, or within 50°C of the temperature to which the metal slab was re-heated before it was rolled in the reversing rolling mill.

The temperature-holding device can be an enclosed or non-enclosed structure comprising heating elements, temperature-holding furnace, whereby heat is produced to heat the at least one divided metal plate to a particular temperature or temperature range.

Alternatively, the temperature-holding device can be a thermally insulated enclosed chamber that does not comprise heating means, but which minimizes heat loss, or prevents heat from being lost from the at least one divided metal plate.

The expression "re-heating furnace" is intended to mean equipment for heating at least one metal slab to a temperature that is suitable for plastic deformation of the metal and hence for rolling in a reversing rolling mill. The heating process in a re-heating furnace may be a batch process or a continuous process. The target exit temperature of the at least one metal slab is governed by the requirement of the rolling process, which is dependent on the rolling speed, the metal slab dimensions and the chemical composition of the metal. A plurality of metal slabs of different dimensions, chemical compositions and initial temperature may reside in a re-heating furnace at the same time.

The re-heating may for example be a batch furnace, a continuous pusher furnace, a rotary hearth furnace, a walking beam furnace, a walking hearth furnace, a roller hearth re-heating furnace.

It should be noted that a furnace that is used for re-heating the metal slab to a rolling temperature may also be used as a temperature-holding device if this does not adversely affect the productivity of the manufacturing process. It is however preferable that the furnace that is used for re-heating the metal slab to a rolling temperature is not used as a temperature-holding device.

Furthermore, the temperature-holding device may be a single unit that is arranged to contain all of the divided metal plates being produced from one or more metal slabs, or it may be constituted by a plurality of units that are each arranged to contain one or more of the divided metal plates being produced from one or more metal slabs.

The temperature-holding device should be located in the vicinity of the reversing rolling mill, preferably at a maximum distance of one or two lengths of a divided metal bar from the reversing tolling mill, so that heat loss is minimized as divided metal plates are transferred between the reversing rolling mill and the temperature-holding device. The transfer of divided metal plates between the temperature-holding device and the reversing rolling mill should be as fast as possible so that heat loss and transfer time losses from divided metal plates is minimized while they are being transferred from the temperature-holding device to the roll stand of the reversing rolling mill and vice versa.

It should be noted that the term "plate" as used in this document is not intended to limit a hot-rolled product to a particular thickness or to a hot-rolled product that cannot be wound or coiled after rolling, but refers to any product produced by rolling of any thickness, and includes both hot-rolled products which can and cannot be wound or coiled after rolling. Such hot-rolled products may also be referred to as "sheets" or "strips".

The expression "divide" is intended to mean separating into two or more parts. The individual parts do not necessarily all have to be of the same size and/or shape.

The expression "shearing means" is intended to mean any device for separating a metal plate into two or more divided metal plates.

The expression "metal slab" as used in this document is intended to mean any semi-finished product of any suitable dimensions which is obtained by rolling ingots on a rolling mill or processed through a continuous caster and cut into various lengths. The metal slab may for example have any suitable cross section, such as a rectangular cross section. Such semi-finished products include "ingots", "billets", "blooms" and "strands". The expression "metal slab" also includes finished metal products, such as a metal plate or bar. The metal slab may have any suitable weight, such as a weight of 3-20 tonnes depending on the cast slab's dimensions, such as slab thickness and slab width. The weight of billets is typically lower than the weight of blooms and ingots. A typical metal slab can have a thickness of 200 mm, a width of 2000 mm, a length of 3000 mm, and a weight of 9.4 tonnes.

According to an embodiment of the invention the metal slab has a thickness of 100-300 mm. The metal slab may however have any desired thickness.

According to an embodiment of the invention the method also comprises the step of cross-rolling the metal plate during the hot-rolling of a metal plate to an intermediate thickness in a reversing rolling mill, and/or, if possible, cross-rolling the first divided metal plate during the hot-rolling of the first divided metal plate to the final thickness, and/or, if possible, cross-rolling the second divided metal plate the second divided metal plate during the hot-rolling of the second divided metal plate to the final thickness. By cross-rolling, a wide range of metal plate widths can be obtained from one metal slab width. Cross rolling involves turning a workpiece so that the workpiece's length becomes the workpiece's width in a subsequent rolling pass. The turning takes place on the rolling path just in front of the rolling stand. If a workpiece has a length that is greater than the rolling path's maximum width (which is usually 3-5 m) it cannot be cross-rolled using that rolling stand. Cross rolling of a divided metal plate may be possible if it has a length that is less than the maximum width of the rolling path and it is turned once or twice during cross rolling.

According to an embodiment of the invention the final thickness of at least one of the manufactured hot-rolled metal plates is less than 10 mm, or 9 mm or less, or 8 mm or less, 7 mm or less, 6 mm or less, 5 mm or less, 4 mm or less, 3 mm or less, 2 mm or less.

According to an embodiment of the invention the metal slab is a steel slab. The method comprises the step of re-heating the steel slab to a rolling temperature of up to 1250°C, or up to 1200°C, or up to 1150°C, or up to 1100°C, before it is rolled in the reversing rolling mill to produce a steel plate. The selected rolling temperature will depend on the metal being used, on the dimensions of the hot-rolled metal plates that are to be manufactured, and the roll forces being used.

The method according to the present invention can be used to manufacture hot-rolled metal plates made of any suitable metal, i.e. any pure metal or alloy, such as steel of any grade and any type, such as quenched and tempered steel, aluminium, copper or brass. The manufactured hot-rolled metal plates may have any desired length, width and/or thickness.

According to an embodiment of the invention the method comprises the step of dividing the metal plate into a first divided metal plate and at least a second divided metal plate with the shearing means when the metal plate is located in a roll gap of the reversing rolling mill.

According to an embodiment of the invention the shearing means comprises a flying shear. A flying shear (also known as flying knife) is arranged to cut a metal plate to a predetermined length at line speed, whereby the production process is not interrupted, thus maximizing productivity. Any suitable shearing means may however be used to divide a metal plate into a plurality of divided metal plates in the method according to the present invention.

According to an embodiment of the invention the plurality of manufactured hot-rolled metal plates has the same final thickness.

According to an embodiment of the invention the plurality of manufactured hot-rolled metal plates has a plurality of different final thicknesses, i.e. the plurality of manufactured hot-rolled metal plates do not all have the same final thickness. All of the manufactured hot-rolled metal plates have different thicknesses, or one or more the manufactured hot-rolled metal plates has/have a thickness that is different from one or more other manufactured hot-rolled metal plates.

The present invention also concerns hot-rolling equipment comprising the features recited in claim 10 for carrying out the steps of a method according to any of the embodiments of the present invention.

The hot-rolling equipment comprises a re-heating furnace for re-heating a metal slab to a rolling temperature, a reversing rolling mill, and shearing means for dividing a hot-rolled metal plate into a first divided metal plate and at least a second divided metal plate. The hot-rolling equipment also comprises a temperature-holding device for maintaining at least the second divided metal plate at a desired temperature, transferring means for transferring at least the second divided metal plate from the reversing rolling mill to the temperature-holding device and from the temperature-holding device to the reversing rolling mill. The re-heating means is located upstream of the reversing rolling mill if the production line is a straight line setup. Shearing means may be located on a downstream exit side of a roll stand of a reversing rolling mill as this side usually has a longer run out table. An entry side roller table is usually shorter in a direction from the re-heating furnace towards the reversing rolling mill. A temperature-holding device may be located upstream or downstream of the reversing rolling mill in a straight line setup.

According to an embodiment of the invention the hot-rolling equipment also comprises a cross-rolling apparatus.

According to an embodiment of the invention the hot-rolling equipment comprises re-heating means for re-heating a metal slab to a rolling temperature, such as a rolling temperature of up to 1250°C for a steel slab, before it is rolled in the reversing rolling mill to produce the metal plate.

According to an embodiment of the invention the shearing means is arranged to divide the metal plate a first divided metal plate and at least a second divided metal plate when the metal plate is located in a roll gap of the reversing rolling mill. The dividing process can however also be performed when a metal plate is not located in a roll gap of the reversing rolling mill.

According to an embodiment of the invention the shearing means comprises a flying shear.

According to an embodiment of the invention the temperature-holding device may be located to one side of a roller track along which divided metal plates are transported or above said roller track, whereby a lift may be used to transfer at least one divided metal plate to the temperature-holding device. An advantage of placing the temperature-holding device at a location away from the roller track, rather than along said roller track, is that such an arrangement allows divided metal plates to pass each other in the production process so that divided metal plates can be rolled in a preferred sequence.

At least one temperature-holding device according to any embodiment described herein may be used for maintaining at least one divided metal plate, at a desired temperature, i.e. a particular temperature or temperature range, between two reversing rolling passes. The at least one divided metal plate is at least one flat non-coiled, non-wound metal plate. The desired temperature preferably the temperature at which said at least one divided metal plate will subsequently be rolled.

### BRIEF DESCRIPTION OF THE DRAWINGS

The present invention will hereinafter be further explained by means of non-limiting examples with reference to the appended figures where;
- Figure 1: schematically shows hot-rolling equipment according to an embodiment of the invention, and
- Figure 2: is a flow chart showing the steps of a method according to an embodiment of the invention.

It should be noted that the drawings have not necessarily been drawn to scale and that the dimensions of certain features may have been exaggerated for the sake of clarity.

Furthermore, any feature that has been described with reference to a particular embodiment or example of the method or hot-rolling apparatus is applicable to any other embodiment or example of the method or hot-rolling apparatus unless the description explicitly excludes such as possibility.

### DETAILED DESCRIPTION OF EMBODIMENTS

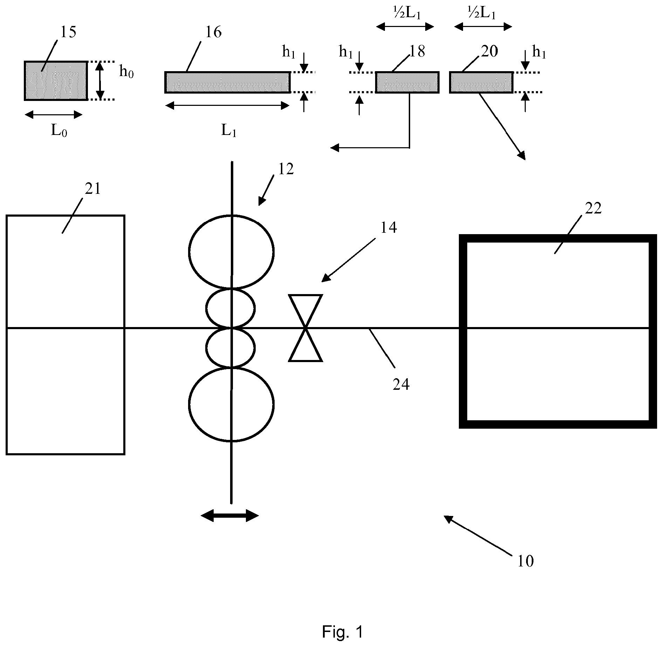

Figure 1 shows hot-rolling equipment 10 comprising a re-heating furnace 21 for re-heating a metal slab 15 of any suitable weight and having any suitable dimensions, to a rolling temperature, a reversing rolling mill 12 for rolling the metal slab 15 to produce a metal plate 16 having an intermediate thickness, h₁, which is less than the initial thickness, ho of the metal slab 15 but greater than the desired final thickness, h_{f}, of the manufactured hot-rolled plates, and shearing means 14 for dividing the hot-rolled metal plate 16 into a plurality of hot-rolled divided metal plates 18, 20 having a shorter length than the hot-rolled metal plate 16. The length of the metal plate 16 is thereby shortened and the rolling time of each divided metal plate 18, 20, and consequently the heat loss from each divided metal plate 18, 20 during rolling, will thereby be decreased as they are rolled to their final thickness.

The hot-rolling equipment 10 also comprises a temperature-holding device 22, located either upstream or downstream of the reversing rolling mill 12 in a straight line setup, and close to the reversing rolling mill 12. The temperature-holding device 22 is arranged to maintain one or more of hot-rolled divided metal plates at a desired temperature, or within 50°C of a desired temperature, or within 100°C of a desired temperature. The hot-rolling equipment also comprises shearing means 14, and transferring means 24 for transferring the hot-rolled divided metal plates 18, 20, between the temperature-holding device 22 and the reversing rolling mill 12.

The re-heating furnace 21 is arranged to re-heat a metal slab 15 to a suitable rolling temperature. If the metal slab 15 is a steel slab, the re-heating furnace 21 may, for example, be arranged to re-heat the steel slab to a temperature up to 1250°C before it is rolled in the reversing rolling mill 12 to produce a steel plate 16.

The hot-rolling equipment 10 may also comprise a cross-rolling apparatus (not shown). During an initial phase of rolling passes, a metal slab 15 can be turned one or more times to achieve a desired width of metal plate 16. During a second phase of rolling passes, once a desired width has been obtained, the metal plate 16 is rolled to a final thickness in the reversing rolling mill 12.

Shearing means 14, such as a flying shear, is preferably arranged to divide a metal plate 16 into a plurality of hot-rolled divided metal plates 18, 20, of a shorter length when the metal plate 16 is located in a roll gap of the reversing rolling mill 12. A flying shear is a cutting tool that is typically mounted on a carriage that moves either parallel to the product flow or at an angle across the product flow. A flying shear drive accelerates the carriage to synchronize the flying shear with the line speed, and activates the cutting tool. The carriage then decelerates and returns to its original position ready to cut again.

Once all of the divided metal plates 18, 20 have been rolled to their final thickness, they may be cooled and/or subjected to one or more processing steps, such as galvanizing, coating, hot- or cold forming etc.

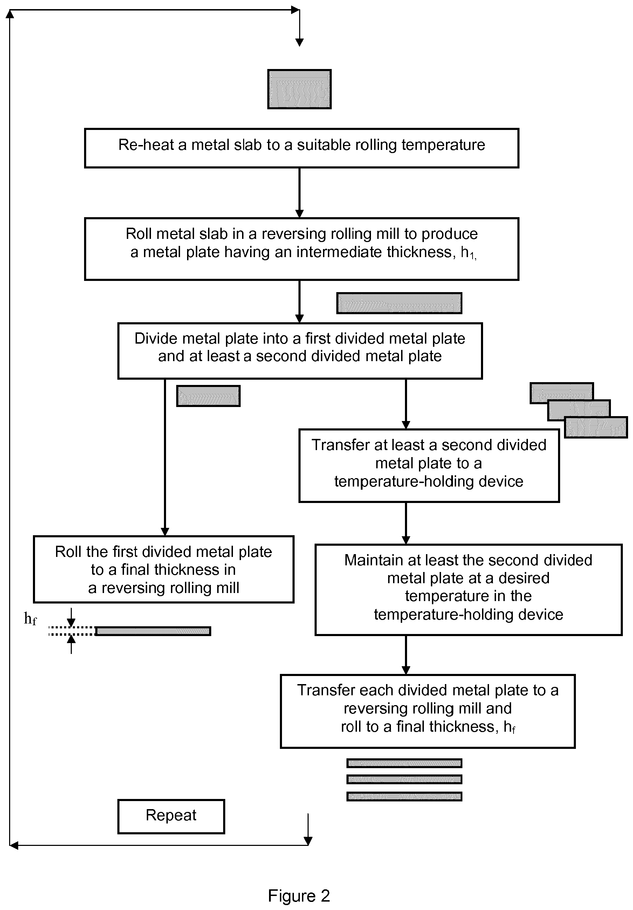

Figure 2 shows the steps of a method according to an embodiment of the present invention. A plurality of hot-rolled metal plates is manufactured by re-heating a metal slab 15 to a suitable rolling temperature. The metal slab 15 has an initial thickness h₀, initial length Lo, and initial width w₀ to ensure that it provides a sufficient volume of metal to produce the desired number of hot-rolled metal plates having the desired final thickness, h_{f}, width, and length.

The re-heated metal slab 15 is rolled in a reversing rolling mill 12 by passing it back and forth through the roll gap of one or more roll stands of the reversing rolling mill 12 to produce a metal plate 16 having an intermediate thickness, h₁, which is smaller than the initial thickness h₀, of the metal slab 15. The intermediate thickness, h₁, may be less than 50 mm, such as 15-50 mm. The intermediate thickness, h₁, is selected so that the, or each divided metal plate 18, 20, will have a weight that is suitable for final rolling down to the desired final thickness, h_{f}, and desired final plate length. The metal plate 16 has an intermediate length L₁ that is greater than the initial length L₀ of the metal slab 15.

Once rolling to the desired intermediate thickness, h₁, has been completed, the metal plate 16 is divided into at least two hot-rolled divided metal plates of a shorter length, namely a first divided metal plate 18 and at least a second divided metal plate 20 using shearing means 14, such as a flying shear. In the embodiment illustrated in figure 1, the metal plate 16 is cut in half whereby the length of each divided metal plate 18, 20 is ½L₁. A metal plate 16 may however be divided into any number of metal plates, each having the same length and/or width, or having different lengths and/or widths.

The shearing means 14 preferably divides the metal plate 16 into a first divided metal plate 18 and at least a second divided metal plate 20 when the metal plate 16 is located in a roll gap of the reversing rolling mill 12. After the dividing step, one divided metal plate (i.e. the first divided metal plate 18) is directly rolled to a final thickness, h_{f} in the reversing rolling mill 12 once the other divided metal plate(s) has/have been moved away from the reversing rolling mill 12.

The other divided metal plate(s) (i.e. at least the second divided metal plate 20 and one, two, three, four or more divided metal plates) is/are transferred by transferring means 24 to a temperature-holding device 22 to maintain it/them at a desired temperature while the first metal plate 18 is being rolled to the final thickness, h_{f} in the reversing rolling mill 12. Once the first metal plate 18 has been rolled to its final thickness, h_{f}, it is removed from the reversing rolling mill 12. The transfer means 24 transfers the second divided metal plate 20 from the temperature-holding device 22 to the reversing rolling mill 12, and the second divided metal plate 20 is then rolled to its final thickness, h_{f} in the reversing rolling mill 12. The process is repeated until all of the divided metal plates in the temperature-holding device 22 have been rolled to their final thickness, h_{f}.

It is not necessary to wait until all of the divided metal plates from a first metal slab 15 have been rolled to their final thickness, before a second metal slab is rolled to produce a second metal plate. It is, for example, possible to start rolling a second metal slab before the dividing of the first metal slab 15 has been completed.

The method according to the present invention, which uses a relatively large metal slabs 15, increases the manufacturing productivity compared to known methods in which metal plates are rolled separately from smaller metal slabs. In the initial rolling phase, rolling one large metal slab is namely more efficient than rolling the same number of passes on two or more smaller metal slabs. The method according to the present invention will therefore have a higher productivity as regards the manufacture of metal plates having given dimensions than a conventional method in which smaller metal slabs (i.e. metal slabs with a weight less than 10 tonnes) are used.

Furthermore, in the method according to the present invention, the yield from metal slab to plate will increase as a larger metal slab will have less yield loss than the same weight of several smaller slabs. The reason for this is that shape losses in the heads and tails of metal plates, which occur mainly during the initial stage of rolling, will be distributed on one slab instead of several slabs. This decreased yield loss results in lower unit manufacturing costs and a considerable savings in raw material and energy.

The method according to the present invention may also comprise the step of cross-rolling the metal plate 16 during the hot-rolling of a metal plate 16 to an intermediate thickness, h₁ in the reversing rolling mill 12, and/or cross-rolling a first divided metal plate 18 during the hot-rolling of the first divided metal plate 18 to its final thickness, h_{f}, in the reversing rolling mill 12, and/or cross-rolling a second divided metal plate 20 during the hot-rolling of the second divided metal plate 20 to its final thickness, h_{f} in the reversing rolling mill 12.

### EXAMPLE

A steel slab having a weight of 10 tonnes, a length of 3400 mm and a cross section of 220 mm x 1700 mm was re-heated to a temperature of 1200°C in a re-heating furnace. The steel slab was then rolled in a reversing rolling mill comprising a single four-high rolling stand and utilizing cross rolling to produce a steel plate having a thickness of 25 mm, a width of 2500 mm and a length of 20 m. The steel plate was divided into three divided steel plates using a flying shear, each having a length of 6.8 m.

One of these divided steel plates was directly rolled in a reversing rolling mill to a final thickness of 5 mm and a length of 34 m. The other divided steel plates were transferred to a temperature-holding furnace and maintained at a temperature of 950°C ± 100°C. Each divided steel sheet was then transferred from the temperature-holding furnace to the reversing rolling mill one at a time as soon as the reversing rolling mill had finished rolling a foregoing divided steel plate. Each divided steel sheet was rolled to a final thickness of 5 mm, a length of 34 m and a width of 2.5 m.

Further modifications of the invention within the scope of the claims would be apparent to a skilled person. For example, even though the claimed method and hot-rolling equipment recite a single re-heating means, reversing rolling mill, shearing means and temperature-holding device, any number re-heating means, reversing rolling mill, shearing means and temperature-holding devices may be used if this can increase productivity.

For example, in method or hot-rolling equipment embodiments in which a plurality of hot-rolled metal plates having a plurality of different dimensions are to be manufactured, the method or hot-rolling equipment can utilize a plurality of temperature-holding devices, each of which is arranged to maintain one or more divided metal plates at a different rolling temperature depending on the dimensions of the hot-rolled metal plates that are to be manufactured.

## Claims

1. Method for manufacturing a plurality of hot-rolled metal plates comprising the steps of re-heating a metal slab (15) to a rolling temperature, rolling said metal slab (15) in a reversing rolling mill (12) to produce a metal plate (16) having an intermediate thickness (hi), and shearing said metal plate (16) to divide it into a first divided metal plate (18) and at least a second divided metal plate (20), wherein said method comprises the steps of hot-rolling said first divided metal plate (18) to a final thickness (h_{f}) in said reversing rolling mill (12), **characterized in that** said method also comprises the steps of transferring at least said second divided metal plate (20) to a temperature-holding device (22) to maintain it/them at a desired temperature while said first divided metal plate (18) is rolled to said final thickness (h_{f}) in said reversing rolling mill (12), and transferring said second divided metal plate (20) from said temperature-holding device (22) to said reversing rolling mill (12) once said first divided metal plate (18) has been rolled to said final thickness (h_{f}), and rolling said second divided metal plate (20) to a final thickness (h_{f}) in said reversing rolling mill (12).

2. Method according to claim 1, **characterized in that** it also comprises the step of cross-rolling said metal plate (16) during said hot-rolling of a metal plate (16) to said intermediate thickness (hi) in said reversing rolling mill (12), and/or cross-rolling said first divided metal plate (18) during the hot-rolling of said first divided metal plate (18) to said final thickness (h_{f}) in said reversing rolling mill (12), and/or cross-rolling said second divided metal plate (20) during the hot-rolling of said second divided metal plate (20) to said final thickness (h_{f}) in said reversing rolling mill (12).

3. Method according to claim 1 or 2, **characterized in that** said final thickness (h_{f}) is less than 10 mm.

4. Method according to any of the preceding claims, **characterized in that** said metal slab (15) is a steel slab.

5. Method according to claim 4, **characterized in that** it comprises the step of re-heating said steel slab (15) to a rolling temperature of up to 1250°C before it is rolled in said reversing rolling mill (12) to produce a steel plate (16).

6. Method according to any of the preceding claims, **characterized in that** it comprises the step of dividing said metal plate (16) into a first divided metal plate (18) and at least a second divided metal plate (20) with said shearing means (14) when said metal plate (16) is located in a roll gap of said reversing rolling mill (12).

7. Method according to any of the preceding claims, **characterized in that** said shearing means (14) comprises a flying shear.

8. Method according to any of the preceding claims, **characterized in that** said plurality of manufactured hot-rolled metal plates has the same final thickness (h_{f}).

9. Method according to any claims 1-7, **characterized in that** said plurality of manufactured hot-rolled metal plates has a plurality of different final thicknesses.

10. Hot-rolling equipment (10) comprising a re-heating furnace (21) a reversing rolling mill (12) for hot-rolling a metal slab (15) to produce a metal plate (16) having an intermediate thickness (hi), and shearing means (14) for dividing a hot-rolled metal plate (16) into a first divided metal plate (18) and at least a second divided metal plate (20), wherein said reversing rolling mill (12) is arranged to hot-roll said first divided metal plate (18) to a final thickness (h_{f}) and the hot-rolling equipment (10) also comprises a temperature-holding device (22) for maintaining at least said second divided metal plate (20) at a desired temperature, **characterized in that** said hot-rolling equipment also comprises transferring means for transferring at least said second divided metal plate (20) from said reversing rolling mill (12) to said temperature-holding device (22) and from said temperature-holding device (22) to said reversing rolling mill (12) for hot-rolling said at least said second divided metal plate (20) to a final thickness (h_{f}). .

11. Hot-rolling equipment (10) according to claim 10, **characterized in that** it also comprises a cross-rolling apparatus.

12. Hot-rolling equipment (10) according to claim 10 or 11, **characterized in that** said shearing means (14) is arranged to divide said metal plate (16) into a first divided metal plate (18) and at least a second divided metal plate (20) when said metal plate is located in a roll gap of said reversing rolling mill (12).

13. Hot-rolling equipment (10) according to any of claims 10-12, **characterized in that** said shearing means (14) comprises a flying shear.

## Patentansprüche

1. Verfahren zum Herstellen mehrerer warmgewalzter Metallplatten, umfassend die Schritte des Wiedererwärmens einer Metallbramme (15) auf eine Walztemperatur, Walzen der Metallbramme (15) in einem Reversierwalzwerk (12), um eine Metallplatte (16) zu produzieren, die eine Zwischendicke (hi) aufweist, und Scherschneiden der Metallplatte (16), um sie in eine erste geteilte Metallplatte (18) und mindestens eine zweite geteilte Metallplatte (20) zu teilen, wobei das Verfahren die Schritte des Warmwalzen der ersten geteilten Metallplatte (18) auf eine Enddicke (h_{f}) in dem Reversierwalzwerk (12) umfasst, **dadurch gekennzeichnet, dass** das Verfahren ebenso die Schritte eines Weitergebens mindestens der zweiten geteilten Metallplatte (20) an eine Temperaturhaltevorrichtung (22), um sie auf einer gewünschten Temperatur zu halten, während die erste geteilte Metallplatte (18) auf die Enddicke (h_{f}) in dem Reversierwalzwerk (12) gewalzt wird, umfasst, und Weitergeben der zweiten geteilten Metallplatte (20) von der Temperaturhaltevorrichtung (22) zu dem Reversierwalzwerk (12), sobald die erste geteilte Metallplatte (18) auf die Enddicke (h_{f}) gewalzt worden ist, und Walzen der zweiten geteilten Metallplatte (20) auf eine Enddicke (h_{f}) in dem Reversierwalzwerk (12).

2. Verfahren nach Anspruch 1, **dadurch gekennzeichnet, dass** es ebenso den Schritt eines Querwalzens der Metallplatte (16) während des Warmwalzens einer Metallplatte (16) auf die Zwischendicke (hi) in dem Reversierwalzwerk (12) und/oder Querwalzen der ersten geteilten Metallplatte (18) während des Warmwalzens der ersten geteilten Metallplatte (18) auf die Enddicke (h_{f}) in dem Reversierwalzwerk (12), und/oder Querwalzen der zweiten geteilten Metallplatte (20) während des Warmwalzens der zweiten geteilten Metallplatte (20) auf die Enddicke (h_{f}) in dem Reversierwalzwerk (12) umfasst.

3. Verfahren nach Anspruch 1 oder 2, **dadurch gekennzeichnet, dass** die Enddicke (h_{f}) weniger als 10 mm beträgt.

4. Verfahren nach einem der vorhergehenden Ansprüche, **dadurch gekennzeichnet, dass** die Metallbramme (15) eine Stahlbramme ist.

5. Verfahren nach Anspruch 4, **dadurch gekennzeichnet, dass** es den Schritt des Wiedererwärmens der Stahlbramme (15) auf eine Walztemperatur von bis zu 1250 °C, bevor sie in dem Reversierwalzwerk (12) gewalzt wird, um eine Stahlplatte (16) zu produzieren, umfasst.

6. Verfahren nach einem der vorhergehenden Ansprüche, **dadurch gekennzeichnet, dass** es den Schritt des Teilens der Metallplatte (16) in eine erste geteilte Metallplatte (18) und mindestens eine zweite geteilte Metallplatte (20) mit dem Scherschneidemittel (14), wenn sich die Metallplatte (16) in einem Walzspalt des Reversierwalzwerks (12) befindet, umfasst.

7. Verfahren nach einem der vorhergehenden Ansprüche, **dadurch gekennzeichnet, dass** das Scherschneidemittel (14) eine fliegende Schere umfasst.

8. Verfahren nach einem der vorhergehenden Ansprüche, **dadurch gekennzeichnet, dass** die mehreren hergestellten warmgewalzten Metallplatten die gleiche Enddicke (h_{f}) aufweisen.

9. Verfahren nach einem der Ansprüche 1 bis 7, **dadurch gekennzeichnet, dass** die mehreren hergestellten warmgewalzten Metallplatten mehrere unterschiedliche Enddicken aufweisen.

10. Warmwalzanlage (10), umfassend einen Wiedererwärmungsofen (21), ein Reversierwalzwerk (12) zum Warmwalzen einer Metallbramme (15), um eine Metallplatte (16) zu produzieren, die eine Zwischendicke (hi) aufweist, und Scherschneidemittel (14) zum Teilen einer warmgewalzten Metallplatte (16) in eine erste geteilte Metallplatte (18) und mindestens eine zweite geteilte Metallplatte (20), wobei das Reversierwalzwerk (12) angeordnet ist, um die erste geteilte Metallplatte (18) auf eine Enddicke (h_{f}) warmzuwalzen und die Warmwalzanlage (10) ebenso eine Temperaturhaltevorrichtung (22) zum Halten mindestens der zweiten geteilten Metallplatte (20) auf einer gewünschten Temperatur, umfasst, **dadurch gekennzeichnet, dass** die Warmwalzanlage ebenso Weitergabemittel zum Weitergeben mindestens der zweiten geteilten Metallplatte (20) von dem Reversierwalzwerk (12) zu der Temperaturhaltevorrichtung (22) und von der Temperaturhaltevorrichtung (22) an das Reversierwalzwerk (12) zum Warmwalzen der mindestens der zweiten geteilten Metallplatte (20) auf eine Enddicke (h_{f}) umfasst.

11. Warmwalzanlage (10) nach Anspruch 10, **dadurch gekennzeichnet, dass** sie ebenso eine Querwalzeinrichtung umfasst.

12. Warmwalzanlage (10) nach Anspruch 10 oder 11, **dadurch gekennzeichnet, dass** das Scherschneidemittel (14) angeordnet ist, um die Metallplatte (16) in eine erste geteilte Metallplatte (18) und mindestens eine zweite geteilte Metallplatte (20) zu teilen, wenn sich die Metallplatte in einem Walzspalt des Reversierwalzwerks (12) befindet.

13. Warmwalzanlage (10) nach einem der Ansprüche 10 bis 12, **dadurch gekennzeichnet, dass** das Scherschneidemittel (14) eine fliegende Schere umfasst.

## Revendications

1. Procédé de fabrication d'une pluralité de plaques métalliques laminées à chaud comprenant les étapes de réchauffe d'une brame métallique (15) pour atteindre une température de laminage, de laminage de ladite brame métallique (15) dans un laminoir réversible (12) pour produire une plaque métallique (16) ayant une épaisseur intermédiaire (h₁), et de cisaillage de ladite plaque métallique (16) pour la diviser en une première plaque métallique divisée (18) et au moins une seconde plaque métallique divisée (20), dans lequel ledit procédé comprend les étapes de laminage à chaud de ladite première plaque métallique divisée (18) pour atteindre une épaisseur finale (h_{f}) dans ledit laminoir réversible (12), **caractérisé en ce que** ledit procédé comprend également les étapes de transfert d'au moins ladite seconde plaque métallique divisée (20) vers un dispositif de maintien de température (22) pour la/les maintenir à une température souhaitée pendant que ladite première plaque métallique divisée (18) est laminée pour atteindre ladite épaisseur finale (h_{f}) dans ledit laminoir réversible (12), et de transfert de ladite seconde plaque métallique divisée (20) depuis ledit dispositif de maintien de la température (22) vers ledit laminoir réversible (12) une fois que ladite première plaque métallique divisée (18) a été laminée pour atteindre ladite épaisseur finale (h_{f}), et de laminage de ladite seconde plaque métallique divisée (20) pour atteindre une épaisseur finale (h_{f}) dans ledit laminoir réversible (12).

2. Procédé selon la revendication 1, **caractérisé en ce qu'il** comprend également l'étape de laminage croisé de ladite plaque métallique (16) pendant ledit laminage à chaud d'une plaque métallique (16) pour atteindre ladite épaisseur intermédiaire (hi) dans ledit laminoir réversible (12), et/ou de laminage croisé de ladite première plaque métallique divisée (18) pendant le laminage à chaud de ladite première plaque métallique divisée (18) pour atteindre ladite épaisseur finale (h_{f}) dans ledit laminoir réversible (12), et/ou de laminage croisé de ladite seconde plaque métallique divisée (20) pendant le laminage à chaud de ladite seconde plaque métallique divisée (20) pour atteindre ladite épaisseur finale (h_{f}) dans ledit laminoir réversible (12).

3. Procédé selon la revendication 1 ou 2, **caractérisé en ce que** ladite épaisseur finale (h_{f}) est inférieure à 10 mm.

4. Procédé selon l'une quelconque des revendications précédentes, **caractérisé en ce que** ladite brame métallique (15) est une brame d'acier.

5. Procédé selon la revendication 4, **caractérisé en ce qu'**il comprend l'étape de réchauffe de ladite brame d'acier (15) pour atteindre une température de laminage allant jusqu'à 1 250 °C avant qu'elle ne soit laminée dans ledit laminoir réversible (12) pour produire une plaque d'acier (16).

6. Procédé selon l'une quelconque des revendications précédentes, **caractérisé en ce qu'**il comprend l'étape consistant à diviser ladite plaque métallique (16) en une première plaque métallique divisée (18) et au moins une seconde plaque métallique divisée (20) avec lesdits moyens de cisaillage (14) lorsque ladite plaque métallique (16) est située dans un espace entre les cylindres dudit laminoir réversible (12).

7. Procédé selon l'une quelconque des revendications précédentes, **caractérisé en ce que** lesdits moyens de cisaillage (14) comprennent une cisaille volante.

8. Procédé selon l'une quelconque des revendications précédentes, **caractérisé en ce que** ladite pluralité de plaques métalliques laminées à chaud fabriquées possède la même épaisseur finale (h_{f}).

9. Procédé selon l'une quelconque des revendications 1 à 7, **caractérisé en ce que** ladite pluralité de plaques métalliques laminées à chaud fabriquées possède une pluralité d'épaisseurs finales différentes.

10. Équipement de laminage à chaud (10) comprenant un four de réchauffe (21), un laminoir réversible (12) pour le laminage à chaud d'une brame métallique (15) pour produire une plaque métallique (16) ayant une épaisseur intermédiaire (h₁), et des moyens de cisaillage (14) pour diviser une plaque métallique laminée à chaud (16) en une première plaque métallique divisée (18) et au moins une seconde plaque métallique divisée (20), dans lequel ledit laminoir réversible (12) est agencé pour laminer ladite première plaque métallique divisée (18) pour atteindre une épaisseur finale (h_{f}) et l'équipement de laminage à chaud (10) comprend également un dispositif de maintien de température (22) pour maintenir au moins ladite seconde plaque métallique divisée (20) à une température souhaitée, **caractérisé en ce que** ledit équipement de laminage à chaud comprend également des moyens de transfert pour transférer au moins ladite seconde plaque métallique divisée (20) depuis ledit laminoir réversible (12) vers ledit dispositif de maintien de température (22) et depuis ledit dispositif de maintien de température (22) vers ledit laminoir réversible (12) pour laminer à chaud au moins ladite seconde plaque métallique divisée (20) pour atteindre une épaisseur finale (h_{f}).

11. Équipement de laminage à chaud (10) selon la revendication 10, **caractérisé en ce qu'**il comprend également un appareil de laminage croisé.

12. Équipement de laminage à chaud (10) selon la revendication 10 ou 11, **caractérisé en ce que** lesdits moyens de cisaillage (14) sont agencés pour diviser ladite plaque métallique (16) en une première plaque métallique divisée (18) et au moins une seconde plaque métallique divisée (20) lorsque ladite plaque métallique est située dans un espace entre les cylindres dudit laminoir réversible (12).

13. Équipement de laminage à chaud (10) selon l'une quelconque des revendications 10 à 12, **caractérisé en ce que** lesdits moyens de cisaillage (14) comprennent une cisaille volante.
